# DEMANDE DE BREVET EUROPEEN

(11) **EP 2 107 802 A1**
(43) Date de publication de la demande: **07.10.2009**
(21) Numéro de dépôt: 09156868.3
(22) Date de dépôt: 31.03.2009
(51) Int. Cl.: H04N 5/44

(54) **Dispositif de commande de plusieurs appareils à partir d'une télécommande infrarouge.**

(30) Priorité: 31.03.2008 FR 0852104
(71) Demandeur: FRANCE TELECOM, 75015 Paris (FR)
(72) Inventeur: Vacquie, Luc, 31380 Saint Jean L'Herm (FR)
(74) Mandataire: Cabinet Plasseraud

(57) **Abrégé**

L'invention concerne un dispositif de commande d'un premier appareil qui comporte :
• des moyens (5) de réception de signaux de commande infrarouges en provenance d'une télécommande (7), celle-ci étant adaptée pour transmettre des signaux de commande infrarouges vers un second appareil
• des moyens (8) de pilotage de fonctions dudit premier appareil (3) en fonction des signaux de commande reçus.
• des moyens (11) d'inhibition adaptés pour inhiber la réception par le second appareil (9) des signaux de commande infrarouges provenant de la télécommande ceux-ci comportant des moyens d'émission de lumière infra-rouge (11, 15) pour saturer des moyens (13) de réception infrarouge du second appareil.

## Description

La présente invention concerne un dispositif de commande d'un premier appareil comportant des moyens de réception de signaux de commande infrarouge en provenance d'une télécommande et des moyens de pilotage des fonctions dudit premier appareil en fonction des signaux de commande reçus.

L'immense majorité des télécommandes pour les appareils audiovisuels tels que les téléviseurs, les lecteurs de DVD, les magnétoscopes, les récepteurs satellite, etc, fonctionnent par émission de lumière infrarouge. Les appareils sont munis d'un récepteur infrarouge sur leur façade capable de lire et d'analyser un flux de lumière infrarouge. Leur télécommande est équipée d'une diode émettant de la lumière infrarouge sous forme de séquence (allumé/éteint) selon un code prédéfini commun entre le récepteur et l'émetteur. La très grande majorité des appareils utilise l'une des deux normes de codage RC-5 ou RECS 80. Ces codages définissent des trains d'impulsion (allumé/éteint) pour former des commandes, le codage de celles-ci diffère en termes de vitesse et de nombre de bits en fonction de la norme utilisée. Ces normes sont bien connues de l'homme du métier et ne seront pas décrites plus en détail dans ce document.

La prolifération des appareils audiovisuels chez le particulier s'est accompagnée d'une prolifération identique de télécommande, puisqu'à chaque appareil est associé une télécommande.

Pour pallier cet inconvénient, des télécommandes universelles ont été développées dont l'objectif est de pouvoir piloter plusieurs appareils avec une seule de ces télécommandes universelles.

Elles comportent donc une multiplicité de boutons pour couvrir toutes les commandes possibles de cette diversité d'appareils, ainsi que des boutons de sélection de l'appareil à commander. Ou bien, pour les plus sophistiquées, tout ou partie des boutons est paramétrable ou est virtuel sous forme de dessins sur un écran tactile. Ces dernières télécommandes sont alors programmables par l'utilisateur pour qu'il puisse les adapter à ses besoins.

Afin que ces télécommandes universelles puissent piloter les appareils spécifiques de l'utilisateur, ces télécommandes doivent être paramétrées avec les jeux de commandes infrarouges spécifiques de ces appareils. Pour cela, il existe trois méthodes :
- la télécommande universelle possède une base de données de codes associée à une liste des appareils pilotables classés par marque et par modèle. Il suffit alors de trouver chaque appareil pilotable dans cette liste et d'entrer une référence associée. Si aucun ne correspond, il est presque toujours possible d'engager un mode de « recherche » consistant à parcourir tous les appareils de la base et d'envoyer l'ordre d'extinction. Si l'appareil à piloter ne s'éteint pas, la télécommande passe au suivant, s'il s'éteint, on vérifie pour les autres touches si cela correspond à l'appareil trouvé. Ce mode de recherche peut fonctionner parce que beaucoup d'appareils de même type existent sous des marques et des modèles différents selon les pays.
- devant la multiplication des références des appareils à piloter, les constructeurs de télécommande ont ajouté une option permettant à leur télécommande universelle d'apprendre les codes d'une autre télécommande. Certaines télécommandes universelles ne savent faire que cela, d'autres cumulent cette méthode d'apprentissage avec une base de données comme décrit ci-dessus, la méthode d'apprentissage étant alors réservée aux appareils non connus par la base de données.
- enfin, pour éviter de devoir ajouter des fonctionnalités d'apprentissage, d'autres télécommandes universelles peuvent mettre à jour leur base de données par internet, ou directement par téléphone via un modem audio intégré. Dans ce dernier cas, il suffit de plaquer la télécommande sur le combiné pour récupérer les codes manquants.

Bien que permettant ainsi de minimiser le nombre de télécommandes à utiliser, faisant ainsi gagner en simplicité à l'utilisateur, ces télécommandes universelles ont l'inconvénient d'être relativement onéreuses, voire très onéreuses pour les télécommandes programmables, sans offrir d'autres fonctionnalités que le regroupement des commandes dans un même objet.

La demande de brevet WO 00/13344 décrit un système de transmission d'un ordre provenant d'une télécommande à un appareil. Ce système comporte deux dispositifs reliés par un moyen de transmission. Le premier dispositif reçoit l'ordre de la télécommande, le décode et le transmet par le moyen de transmission au second dispositif qui réémet une commande optique destinée à l'appareil. Cet appareil comporte un dispositif l'empêchant alors de répondre deux fois : à l'ordre reçu en direct de la télécommande et au même ordre reçu via le second dispositif.

Le document EP 0 612 157 décrit également un système centralisé d'ordres en provenance d'une télécommande, les ordres étant distribués via un bus aux différents appareils et un dispositif du système empêche les appareils de recevoir les ordres directement de la télécommande.

Il serait donc particulièrement avantageux d'avoir un dispositif de commande d'appareil audiovisuel qui permette également une centralisation des commandes tout en améliorant le rapport fonctionnalité/prix des télécommandes universelles.

Ainsi, selon un aspect de l'invention, un dispositif de commande d'un premier appareil comporte :
- des moyens de réception de signaux de commande infrarouges en provenance d'une télécommande, celle-ci étant adaptée pour transmettre des signaux de commande infrarouges vers un second appareil, et
- des moyens de pilotage de fonctions du premier appareil en fonction des signaux de commande reçus.
- des moyens d'inhibition adaptés pour inhiber la réception par le second appareil des signaux de commande infrarouges provenant de la télécommande, et les moyens d'inhibition comportent des moyens d'émission de lumière infrarouge adaptés pour saturer des moyens de réception infrarouge du second appareil. Cela permet avantageusement d'inhiber le fonctionnement du second appareil sans avoir à le modifier.

Selon d'autres caractéristiques et modes de réalisation du dispositif de commande de l'invention :
- il comporte en outre des moyens de connexion à un dispositif d'affichage adaptés pour faire afficher audit dispositif d'affichage un état des dits moyens d'inhibition. Ainsi, l'utilisateur a avantageusement un repère simple pour savoir quel appareil il est en train de commander avec la télécommande.
- il comporte en outre des moyens de commande d'alimentation électrique adaptés pour couper l'alimentation électrique dudit second appareil sur réception d'un signal de commande infrarouge prédéterminé. Ainsi, l'utilisateur peut avantageusement gérer la consommation électrique de ses appareils par l'intermédiaire de la télécommande. Un seul appareil, le dispositif de commande, a besoin de rester alimenté électriquement et dans un mode « veille ».
- il comporte un boîtier présentant une face d'appui et des moyens de fixation magnétique, ladite face d'appui et les moyens de fixation magnétique étant agencés pour fixer ledit boîtier au second appareil par appui de ladite face d'appui du boîtier contre une face du second appareil. Ainsi, le dispositif est positionnable aisément par l'utilisateur, sans utilisation d'outil, de façon à ce que les moyens d'inhibition fonctionnent correctement.

En fonction du dispositif et de l'utilisation envisagée, un mode particulier de réalisation peut être préféré comme étant plus facile à utiliser. Cependant ces différents modes de réalisation peuvent être combinés ou modifiés selon le besoin ou le souhait.

Selon un second aspect de l'invention, un ensemble comprenant un dispositif de commande d'un premier appareil comme décrit ci-dessus et ledit premier appareil, cet ensemble comprenant des moyens de liaison entre le dispositif de commande et le premier appareil.

L'invention sera mieux comprise à la lecture de la description qui suit, donnée uniquement à titre d'exemple, du dispositif de commande de l'invention, en référence aux dessins en annexe dans lesquels :
- la figure 1 est une vue schématique d'un dispositif de commande selon un premier mode de réalisation de l'invention ;
- la figure 2 est une vue schématique d'une association d'un dispositif selon un second mode de réalisation de l'invention avec un appareil audiovisuel ; et
- la figure 3 est une vue schématique de face, de dessus et de côté du dispositif de commande de la figure 2.

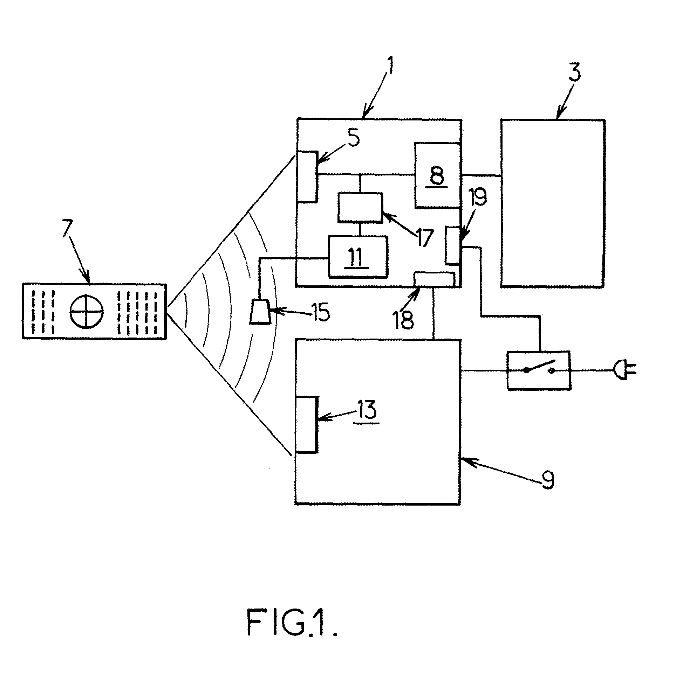

Sur la figure 1, on a représenté un premier appareil 3, un dispositif 1 de commande de ce premier appareil 3, un second appareil 9 et une télécommande infrarouge 7, associée à ce second appareil 9.

Dans le premier exemple de réalisation décrit ici, le premier appareil 3 est un lecteur DVD et le second appareil 9 est un téléviseur.

La télécommande 7 est "associée" au second appareil 9 (téléviseur) dans le sens où elle est configurée en usine pour commander à distance, par la transmission de signaux de commande infrarouges, le second appareil 9 (téléviseur) et fournie avec ce dernier lors de sa distribution. Le second appareil 9 (téléviseur) comprend de façon classique des moyens de réception infrarouge 13, adaptés pour recevoir des signaux infrarouges de commande transmis par la télécommande 7.

Le lecteur DVD 3 est doté de fonctions usuelles relatives à l'utilisation d'un disque DVD : navigation dans un menu associé à un contenu, tel qu'un film enregistré sur le disque DVD, sélection d'éléments dans ce menu (paramètres de configuration du contenu, chapitres de ce contenu, etc.), commandes relatives à la lecture du disque DVD (lecture, pause, avance/retour, arrêt, éjection, etc.), etc.

Le dispositif 1 de commande du premier appareil 3 (lecteur DVD dans l'exemple cité) comporte des moyens de réception 5 de signaux de commande infrarouges en provenance de la télécommande 7 ainsi que des moyens de pilotage 8 des fonctions du premier appareil 3 en fonction des signaux de commande reçus. Les moyens de pilotage 8 sont adaptés pour générer des signaux de pilotage des fonctions du premier appareil 3 (lecteur DVD), en fonction des signaux de commande reçus par les moyens de réception 5 et provenant de la télécommande 7 associée au second appareil 9 (téléviseur).

Les signaux de pilotage sont transmis au premier appareil 3 (lecteur DVD) par des moyens de transmission bien connus de l'homme du métier. Par exemple, les moyens de pilotage 8 peuvent commander une diode infrarouge positionnée dans un angle de réception d'un détecteur infrarouge du premier appareil 3 (lecteur DVD). Dans ce cas, la diode commandée par les moyens de pilotage 8 est adaptée pour émettre des signaux de commande infrarouges aptes à être interprétés par le premier appareil 3. En variante, les moyens de transmission entre le dispositif de commande 1 et le premier appareil 3 (lecteur DVD) peuvent être des moyens filaires.

En toute hypothèse, les moyens de pilotage 8 sont adaptés pour transcoder une commande reçue de la télécommande 7 et ayant un codage adapté à sa réception par le second appareil 9 (téléviseur) en une commande comprise par le premier appareil 3.

La télécommande 7 utilise les normes habituelles pour ce type d'appareil, à savoir, le protocole RC5 ou le protocole RECS80, par exemple. Les moyens 5 de réception de signaux de commande sont donc paramétrables de façon à être aptes à comprendre, c'est-à-dire à interpréter, les signaux émis par la télécommande 7. Ce paramétrage est réalisé classiquement comme pour les télécommandes universelles, par sélection dans une base de données pouvant être mise à jour ou non, et/ou par apprentissage.

Le dispositif de commande 1 comporte également des moyens 11 d'inhibition des moyens 13 de réception des signaux de commande infrarouges du second appareil 9. Dans l'exemple particulier décrit ici, ces moyens d'inhibition 11 comportent des moyens de commande d'une source d'émission infrarouge 15 adaptée et positionnée de manière à saturer les moyens de réception infrarouge 13 du second appareil 9. Par saturation, on entend que, en fonctionnement, la source infrarouge 15 émet une lumière infrarouge continue avec une intensité suffisante pour empêcher les moyens de réception 13 de capter les signaux en provenance de la télécommande 7.

En fonctionnement, les moyens d'inhibition 11 sont activés ou désactivés par des moyens d'activation 17 à la réception d'un signal infrarouge de basculement prédéterminé, provenant de la télécommande 7, comme cela sera explicité dans la description qui suit du fonctionnement du dispositif de commande 1.

Le dispositif de commande 1 comporte également des moyens de commande 18 de l'affichage du téléviseur 9 ainsi que des moyens 19 de commande de l'alimentation électrique de celui-ci.

Le fonctionnement du dispositif de commande 1 est le suivant.

Le dispositif de commande 1 a deux modes opérationnels : un mode désactivé et un mode activé.

Lorsque le dispositif de commande 1 est en mode désactivé, la source d'émission infrarouge 15 n'émet pas de lumière infrarouge. La télécommande 7, associée au second appareil 9 (téléviseur), remplit alors son rôle de commande à distance du second appareil 9 (téléviseur). Lorsque le dispositif de commande 1 est en mode activé, la source d'émission infrarouge 15 émet de lumière infrarouge de manière à inhiber le récepteur infrarouge du second appareil (téléviseur) 9 et la télécommande 7 a alors pour rôle de commander à distance le premier appareil 3 (téléviseur).

Prenons l'hypothèse initiale où le dispositif de commande 1 est en mode désactivé, la télécommande 7 ayant pour rôle de commander à distance le second appareil 9 (téléviseur). Lorsqu'un utilisateur souhaite utiliser la télécommande 7 pour commander à distance le premier appareil 3 (lecteur DVD), à la place du second appareil 9 (téléviseur), autrement dit faire basculer la télécommande 7 du second appareil 9 vers le premier appareil 3, il appuie sur un bouton spécifique de la télécommande 7, par exemple sur le bouton "1" de façon prolongée. La télécommande 7 génère alors un signal infrarouge de commande prédéterminé, que l'on appellera par la suite "signal de basculement".

A la réception de ce signal de basculement par le dispositif de commande 1, celui-ci bascule en mode activé. Dans ce mode, les moyens d'activation 17 activent les moyens d'inhibition 11. Une fois activés, les moyens d'inhibition 11 commandent l'émission de signaux infrarouges par la source 15 en direction des moyens de réception infrarouge 13 du second appareil 9 (téléviseur). A partir de cet instant, le second appareil 9 (téléviseur) n'est plus capable de recevoir de signaux de commande en provenance de la télécommande 7. Les signaux de commande émis par la télécommande 7 sont captés par les moyens de réception 5 et utilisés par le dispositif de commande 1 pour émettre des signaux de pilotage du premier appareil 3.

Lorsque l'utilisateur souhaite à nouveau utiliser la télécommande 7 pour commander à distance le second appareil 9 (téléviseur), autrement dit, faire basculer la télécommande 7 du premier appareil 3 vers le second appareil 9, il appuie de nouveau sur le bouton spécifique de la télécommande 7, en l'espèce sur le bouton "1" de façon prolongée. La télécommande 7 génère alors un nouveau signal infrarouge de basculement, destiné à faire basculer la télécommande 7 du second appareil 9 vers le premier appareil 3. A la réception de ce nouveau signal de basculement, les moyens d'activation 17 désactivent les moyens d'inhibition 11. Le dispositif de commande 1 bascule ainsi en mode désactivé. Il en résulte que la source d'émission 15 cesse d'émettre des signaux infrarouges de sorte que les moyens de réception 13 du second appareil (téléviseur) cessent d'être saturés. A partir de cet instant, le second appareil 9 redevient capable de recevoir des signaux de commande infrarouges en provenance de la télécommande 7.

Il est à noter que lorsque le dispositif de commande 1 est connecté à un téléviseur comme, dans le cas présent, par les moyens de commande 18, ou bien s'il possède un affichage propre tel qu'un écran LCD, le moment de basculement peut être "matérialisé" visuellement par une animation appropriée concrétisant l'effet de l'appui sur la touche provoquant le basculement de commande d'un appareil à l'autre.

Dans la description qui précède, c'est le même signal de basculement qui est utilisé pour faire basculer la télécommande du second appareil vers le premier et inversement du premier vers le second appareil. En variante, on pourrait envisager d'utiliser deux signaux de basculement différents pour ces deux basculements respectifs, pouvant être générés par des appuis sur deux boutons différents de la télécommande 7.

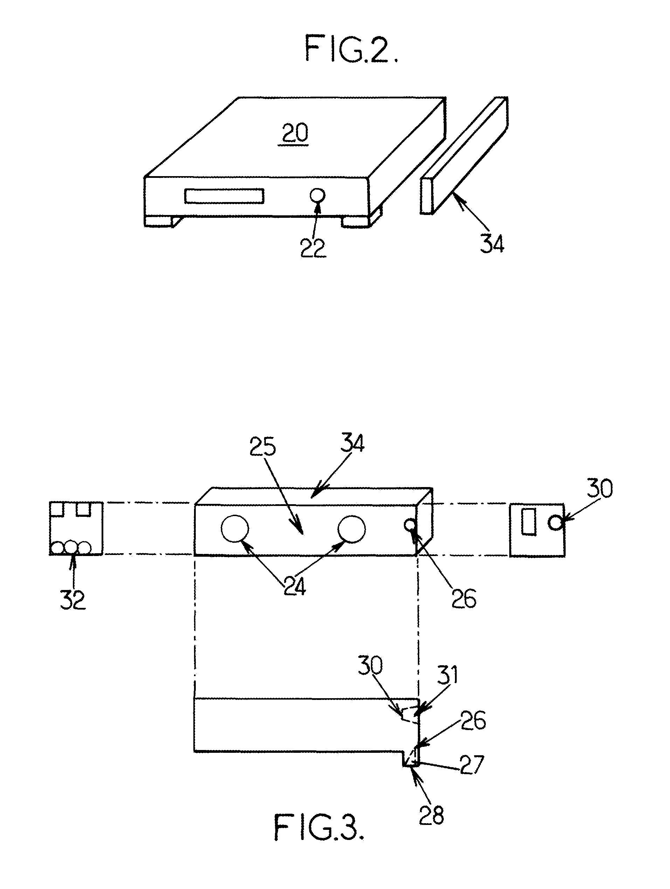

On va maintenant décrire une forme de réalisation particulière du dispositif de commande de l'invention en référence aux figures 2 et 3. Dans cette forme de réalisation, le dispositif de commande selon l'invention, comprend un boîtier 34.

Le boîtier 34 a la forme d'un parallélépipède rectangle pouvant se placer indifféremment contre une face d'un appareil 20, en l'espèce un lecteur DVD, par une face d'appui 25. Bien entendu, l'appareil 20 pourrait être un autre appareil apte à être télécommandé, tel qu'un home cinéma ou un récepteur satellite. Ces appareils ont pour caractéristique d'avoir la forme d'un parallélépipède d'une profondeur approximativement comprise entre 20 et 35 cm.

L'appareil 20 est associé à une télécommande infrarouge, non représentée, et doté d'un récepteur infrarouge 22, positionné en façade.

Le boîtier 34 inclut des fonctions de télévision sur IP, de type "set-top box", et est adapté pour inhiber le récepteur infrarouge 22 de l'appareil 20.

En comparaison avec le mode de réalisation décrit précédemment, dans ce mode de réalisation, le dispositif de commande 1 et le premier appareil 3 sont intégrés dans un seul boîtier 34.

Le boîtier 34 comporte, sur l'une des grandes faces du parallélépipède, des aimants 24, représentés sur la figure 3. Ainsi le boîtier 34 peut se placer au-dessus, éventuellement au-dessous, ou sur un des deux côtés latéraux de l'appareil 20. Sa fixation est assurée par les deux aimants 24 adaptés pour plaquer l'une des grandes faces du boîtier parallélépipédique 34 contre une face supérieure, inférieure ou latérale de l'appareil 20.

Ainsi, en fonction de l'emplacement du récepteur infrarouge 22 de l'appareil 20, il est facile de positionner le boîtier 34 au plus près de ce récepteur 22.

En référence à la figure 3, le boîtier 34 comporte
- une diode infrarouge 26, jouant le rôle de source d'émission infrarouge destinée à inhiber le récepteur infrarouge de l'appareil 20,
- un récepteur infrarouge 30, destiné à recevoir des signaux infrarouge en provenance de la télécommande 7,
- des moyens d'activation, non représentés,
- des moyens d'inhibition, non représentés, destinés à être activés et désactivés par les moyens d'activation.

Les moyens listés ci-dessus sont analogues à ceux du dispositif de commande 1, précédemment décrit en référence à la figure 1.

La diode infrarouge 26, chargée d'inhiber le récepteur infrarouge 22 de l'appareil 20, est positionnée derrière un orifice 27 du boîtier 34 sur un épaulement 28. Cet orifice est percé en biais et ainsi conformé pour diriger la lumière infrarouge émise par la diode 26 vers la façade de l'appareil 20, sur laquelle se trouve le récepteur infrarouge 22. Grâce à cela, on minimise le risque de réflexion de la lumière infrarouge émise par la diode 26 vers le récepteur infrarouge 30 du boîtier 34, lequel est placé en façade de ce boîtier 34 comme représenté sur la figure 3. De préférence, le récepteur infrarouge 30 est placé au fond d'un entonnoir noir 31 afin de minimiser la lumière réfléchie qui le perturberait.

Il est à noter que l'épaulement 28 sert également à assurer une adhérence plus efficace du boîtier 34 à l'appareil 20 notamment en cas d'insertion d'une clé USB dans la façade du boîtier 34. Le boîtier 34 comporte également en façade arrière une connectique 32 permettant l'alimentation du boîtier 34, et comportant également dans l'exemple particulier décrit ici une prise d'entrée vidéo pour une connexion vers la sortie du lecteur DVD, une prise de sortie vidéo vers un téléviseur et une prise réseau Ethernet vers un modem routeur internet.

Après positionnement du boîtier 34 contre l'appareil 20 et connexion des différentes prises, le fonctionnement du boîtier 34 est le suivant.

Pour rappel, dans l'exemple décrit ici, l'appareil 20 est un lecteur de DVD. Pour que l'utilisateur puisse utiliser la télécommande de ce lecteur de DVD 20 pour piloter les fonctions de télévision sur IP du boîtier 34, il commence par apparier classiquement cette télécommande avec le boîtier 34, soit en utilisant une base de données, soit par apprentissage. Pour guider l'utilisateur, le boîtier 34 utilise sa connexion au téléviseur pour afficher différents menus classiques de paramétrage.

Durant cette étape d'appariement, pour éviter toute interférence, le lecteur de DVD 20 est de préférence éteint.

Puis l'utilisateur allume le lecteur de DVD 20.

Suite à un appui prolongé de l'utilisateur sur un bouton spécifique de la télécommande, celle-ci émet un signal de basculement qui, une fois reçu par le boîtier 34, provoque l'activation des moyens d'inhibition de celui-ci. La diode 26 émet alors de la lumière infrarouge qui sature le récepteur 22 du lecteur DVD 20, Le lecteur de DVD 20 n'est alors plus capable de recevoir de commandes infrarouges émises par sa télécommande. Les commandes émises par cette télécommande sont destinées à piloter le boîtier de télévision sur IP. Visuellement, cela se traduit par l'affichage sur l'écran du téléviseur d'un menu spécifique à la télévision sur IP.

Dans cette étape, les boutons de la télécommande sont utilisés pour se déplacer dans un applicatif de télévision sur IP.

Suite à un nouvel appui prolongé de l'utilisateur sur le même bouton spécifique de la télécommande, celle-ci émet un nouveau signal de basculement qui, une fois reçu par le boîtier 34, provoque cette fois la désactivation des moyens d'inhibition. La diode 26 cesse alors d'émettre de la lumière infrarouge. Dès lors, l'applicatif de télévision sur IP ne reçoit plus de commandes alors que le lecteur de DVD 20 reçoit à nouveau les commandes en provenance de la télécommande.

Ainsi, l'utilisateur peut à sa guise utiliser le lecteur de DVD ou les fonctions de télévision sur IP du boîtier 34 avec la même télécommande.

On a donc créé avantageusement une « télécommande universelle » à moindre coût puisqu'on réutilise une télécommande déjà en possession de l'utilisateur pour commander un nouvel appareil, ici un boîtier de télévision sur IP. Et de plus, le boîtier de télévision sur IP peut être vendu à moindre coût puisqu'il n'a pas à fournir, lui aussi, une nouvelle télécommande.

De nombreuses variantes du dispositif sont possibles.

Ainsi, comme noté dans l'exemple illustratif ci-dessus, le dispositif de commande est intégrable dans le boîtier d'une fonction audiovisuelle particulière telle que, par exemple, un lecteur de DVD, un récepteur satellite, un récepteur de télévision sur IP, etc.

Il est également possible de prévoir que les moyens d'inhibition soient capables d'inhiber les moyens de réception de commande infrarouge d'une pluralité d'appareils. Par exemple, la source d'infrarouge peut être orientée de telle sorte qu'elle illumine plusieurs récepteurs en même temps. On comprend que, dans ce cas, la totalité des appareils illuminés sont alors inhibés en même temps.

Il est également possible de prévoir sur le dispositif une pluralité de prises sur lesquelles viennent se connecter par l'intermédiaire d'un fil souple des diodes infrarouges, chaque diode étant positionnée près d'un récepteur d'un appareil particulier. Dans ce mode de réalisation, les moyens d'activation et d'inhibition sont alors avantageusement programmés de telle sorte qu'il soit possible de sélectionner, à un instant donné, un ou plusieurs des appareils à inhiber.

Comme illustré dans le mode de réalisation décrit ci-dessus, il est particulièrement avantageux de prévoir des moyens de connexion du dispositif à un dispositif d'affichage, par exemple le poste téléviseur, de telle sorte que ce dispositif d'affichage puisse présenter un état du dispositif de commande et en particulier des moyens d'inhibition. Par exemple, une signalétique, sous forme d'un bandeau en bas d'écran et d'un jeu de couleurs, permet avantageusement à l'utilisateur de déterminer quels sont les appareils qu'il peut commander à cet instant avec sa télécommande et quels sont ceux qui sont inhibés. De façon générale, cela peut permettre d'afficher plusieurs états du dispositif. Par exemple, chaque membre de la famille peut enregistrer des préférences, des liens vers des vidéos à partager, etc. Toutes ces informations sont regroupées sous forme d'une page affichable sur le téléviseur.

Selon une autre variante, le dispositif de commande comporte des moyens de commande d'alimentation électrique 19, représentés sur la figure 1, pour agir sur un bloc de prises électriques sur lesquelles sont branchés les divers appareils autour du téléviseur. Par exemple, ce bloc de prises électriques peut être à la norme X10 de commande par courant porteur, de telle sorte que le dispositif est capable d'émettre des commandes pour allumer ou éteindre les appareils branchés sur les prises. Des commandes adaptées permettent alors à l'utilisateur, à partir de sa télécommande, et en consultant un tableau de bord affichant l'état des différents appareils à télécommander, d'allumer ou éteindre ses appareils. On conçoit aisément que cette variante permet avantageusement des économies d'énergie en ne laissant pas inutilement des appareils dans un mode veille, tout en gardant l'ergonomie des commandes par infrarouge.

L'homme du métier sait également adapter les moyens d'inhibition à une configuration particulière et remplacer, par exemple, l'utilisation d'une diode infrarouge pour inhiber les moyens de réception par un système mécanique, par exemple de volet, ou électronique tel qu'un écran transparent ou opaque en fonction d'une tension appliquée.

On a ainsi décrit un dispositif de commande qui permet avantageusement de mutualiser la commande de plusieurs appareils autour d'une télécommande standard évitant ainsi, avantageusement, à l'utilisateur l'achat d'une télécommande universelle.

## Revendications

1. Dispositif (1) de commande d'un premier appareil (3) comportant :
• des moyens (5) de réception de signaux de commande infrarouges en provenance d'une télécommande (7), ladite télécommande étant adaptée pour transmettre des signaux de commande infrarouges vers un second appareil
• des moyens (8) de pilotage de fonctions dudit premier appareil (3) en fonction des signaux de commande reçus,
• des moyens (11) d'inhibition adaptés pour inhiber la réception par le second appareil (9) des signaux de commande infrarouges provenant de la télécommande,
**caractérisé en ce que** les moyens (11) d'inhibition comportent des moyens d'émission de lumière infrarouge (11, 15) adaptés pour saturer des moyens (13) de réception infrarouge dudit second appareil.

2. Dispositif de commande selon l'une des revendications 1 dans lequel les moyens d'inhibition sont adaptés pour être activés sur réception d'un signal de commande infrarouge prédéterminé en provenance de la télécommande.

3. Dispositif de commande selon l'une des revendications 1 à 2, **caractérisé en ce que** les moyens (11) d'inhibition sont adaptés pour inhiber des moyens de réception de commande infrarouge d'une pluralité d'appareils.

4. Dispositif de commande selon l'une quelconque des revendications précédentes, **caractérisé en ce qu'**il comporte en outre des moyens de connexion à un dispositif d'affichage adaptés pour faire afficher audit dispositif d'affichage un état des dits moyens d'inhibition.

5. Dispositif de commande selon l'une quelconque des revendications précédentes, **caractérisé en ce qu'**il comporte en outre des moyens de commande d'alimentation électrique adaptés pour couper l'alimentation électrique dudit second appareil sur réception d'un signal de commande infrarouge prédéterminé.

6. Dispositif de commande selon l'une des revendications précédentes, comportant un boîtier présentant une face d'appui et des moyens de fixation magnétique, ladite face d'appui et les moyens de fixation magnétique étant agencés pour fixer ledit boîtier au second appareil par appui de ladite face d'appui du boîtier contre une face du second appareil.

7. Ensemble comprenant un dispositif de commande d'un premier appareil selon l'une des revendications précédentes et ledit premier appareil, comprenant des moyens de transmission entre le dispositif de commande et le premier appareil.
